# EUROPÄISCHE PATENTSCHRIFT

(11) **EP 3 213 392 B1**
(45) Veröffentlichungstag und Bekanntmachung des Hinweises auf die Patenterteilung: **02.12.2020**
(21) Anmeldenummer: 14792508.5
(22) Anmeldetag: 31.10.2014
(51) Int. Cl.: H02K 7/108, H02K 1/32, H02K 7/00, H02K 7/116, H02K 7/08, H02K 5/173, F16H 57/04

(54) **ELEKTROANTRIEB**
ELECTRIC DRIVE
ENTRAÎNEMENT ÉLECTRIQUE

(43) Veröffentlichungstag der Anmeldung: 06.09.2017
(73) Patentinhaber: GKN Automotive Limited, Birmingham, West Midlands B37 7YE (GB)
(72) Erfinder: HAUPT, Jan, 51515 Kürten (DE); ABSENGER, Marc, 42285 Wuppertal (DE); MANGER, Jochen, 53115 Bonn (DE); APRATH, Manuel, 53489 Sinzig (DE); ZAERS, Colin, 53639 Königswinter (DE); BARTZ, Oliver, 46562 Voerde (DE)
(74) Vertreter: Neumann Müller Oberwalleney & Partner Patentanwälte
(86) Internationale Anmeldenummer: PCT/EP2014/073439
(87) Internationale Veröffentlichungsnummer: WO 2016/066215

(56) Entgegenhaltungen:
- EP-A1- 0 587 389
- DE-A1- 4 410 074
- DE-A1-102010 043 816
- US-A1- 2009 127 954
- US-A1- 2010 320 849

## Beschreibung

Die Erfindung betrifft einen Elektroantrieb zum Antreiben eines Kraftfahrzeugs. Ein Elektroantrieb kann als alleiniger Antrieb für das Kraftfahrzeug dienen oder zusätzlich zu einem Verbrennungsmotor vorgesehen sein, wobei der Elektroantrieb und der Verbrennungsmotor jeweils für sich oder gemeinsam überlagert das Kraftfahrzeug antreiben können. Derartige Antriebskonzepte werden auch als "Hybridantrieb" bezeichnet. Üblicherweise umfasst ein Elektroantrieb einen Elektromotor und ein nachgelagertes Übersetzungsgetriebe, das eine eingeleitete Drehbewegung vom Schnellen ins Langsame übersetzt. Das Übersetzungsgetriebe ist mit einem nachgelagerten Differentialgetriebe antriebsverbunden, welches das eingeleitete Drehmoment auf zwei Seitenwellen zum Antreiben der Fahrzeugräder aufteilt.

Elektroantriebe für optional antreibbare Sekundärachsen in Hybrid-Allradfahrzeugen können Abschaltsysteme verwenden, um den Elektromotor bei höheren Fahrzeuggeschwindigkeiten von den Rädern abzukoppeln. Das erlaubt eine günstige Auslegung des Elektromotors in Bezug auf Traktion und reduziert bei höheren Fahrzeuggeschwindigkeiten Reibungsverluste.

Die Versorgung aller drehenden Bauteile eines Elektroantriebs mit Schmiermittel stellt eine Herausforderung dar, insbesondere derjenigen drehenden Bauteile, die von einem Ölsumpf entfernt angeordnet sind.

Aus der EP 0 587 389 A1 ist ein Elektroantrieb mit einer aktiven Beölung bekannt. Der Elektroantrieb hat einen Getriebeabschnitt mit einem Untersetzungsgetriebe und einem Differentialgetriebe und einen Motorabschnitt mit einem Elektromotor. Die beiden Abschnitte sind durch eine Gehäusewand voneinander getrennt, wobei sich die vom Elektromotor angetriebene Motorhohlwelle durch die Gehäusewand hindurch bis in den Getriebeabschnitt hinein erstreckt. Vom Differentialgetriebe ist eine als Vollwelle gestaltete Ausgangswelle durch die Motorhohlwelle hindurchgeführt. Für die aktive Schmiermittelversorgung ist eine hydraulische Pumpe vorgesehen, welche Schmiermittel aus einem Reservoir durch Kanäle in eine Längsbohrung der Vollwelle fördert, von wo aus das Schmiermittel durch eine Radialbohrung in einen Ringspalt zwischen der Vollwelle und die Motorhohlwelle gelangt.

Aus der US 2010/320849 A1 ist ein Elektroantrieb mit einem ähnlichen Aufbau bekannt. Die als Vollwelle gestaltete Ausgangswelle des Differentialgetriebes hat eine Längsbohrung und eine Radialbohrung, durch die Schmiermittel in einen Ringspalt zwischen der Vollwelle und der Motorhohlwelle fließen kann.

Aus der US 2009/127954 A1 ist ein weiterer Elektroantrieb mit Untersetzungsgetriebe, Differentialgetriebe und Elektromotor mit Schmiermittelversorgung bekannt.

Aus der DE 10 2010 043 816 A1 ist eine Getriebeanordnung für eine Windkraftanlage bekannt.

Aus der DE 44 10 074 A1 ist eine Antriebsachse mit einem in einem Achsgehäuse angeordneten Differentialgetriebe bekannt.

Aus der US 2008/0128208 A1 ist ein Elektroantrieb bekannt mit einem Elektromotor, einem Übersetzungsgetriebe und einem Differentialgetriebe, welches das eingeleitete Drehmoment auf die beiden Seitenwellen aufteilt. Der Elektromotor ist koaxial zum Differentialgetriebe angeordnet. Es ist ein erstes Auffangreservoir (catch tank) in einem oberen Abschnitt des Gehäuses vorgesehen, welches zur Schmierölversorgung des Elektromotors und eines Teils des Differentials dient. Ein zweites Auffangreservoir (catch tank) ist vorgesehen, um das vom Rotor des Elektromotors hochgeschleuderte Schmieröl temporär zu speichern, um entfernt liegenden Lagern zugeführt zu werden.

Aus der DE 10 2012 205 757 B4 ist eine Motor-Getriebe-Einheit mit einer elektrischen Maschine und einer als Hohlwelle ausgebildeten Rotorwelle bekannt. Die Rotorwelle hat eine sich in Längsrichtung erstreckende Bohrung, in der eine Schraubendruckfeder angeordnet ist. Die Schraubendruckfeder dreht sich mit der rotierenden Rotorwelle mit und bildet somit eine Förderspirale für ein Kühlmittel.

Der vorliegenden Erfindung liegt die Aufgabe zugrunde, eine Antriebsanordnung mit einem Elektromotor mit in Schmiermittel laufenden Antriebsteilen vorzuschlagen, die eine zuverlässige Schmiermittelversorgung von rotierenden Antriebsteilen gewährleistet und damit eine lange Lebensdauer aufweist.

Die Lösung besteht in einem Elektroantrieb zum Antreiben eines Kraftfahrzeugs, umfassend: eine Gehäuseanordnung; einen Elektromotor mit einer als Hohlwelle ausgebildeten Motorwelle, die um eine Drehachse drehbar antreibbar ist und mit einem Antriebsrad verbunden ist; eine Getriebeeinheit mit zumindest einer Getriebewelle, die von dem Antriebsrad drehend antreibbar ist, und mit zumindest einer Ausgangswelle, wobei sich die Ausgangswelle durch die Hohlwelle hindurch erstreckt; wobei zwischen der Hohlwelle und der Ausgangswelle ein Ringkanal gebildet ist, mit einer der Getriebeeinheit zugewandten ersten Mündung und einer von der Getriebeeinheit entfernten zweiten Mündung; wobei die Gehäuseanordnung eine Schmiermittelleitgeometrie aufweist, die ausgestaltet ist, um Schmiermittel in einen Mündungsbereich der ersten Mündung des Ringkanals zu leiten, so dass das Schmiermittel durch den Ringkanal zu der zweiten Mündung fließen kann; wobei die Gehäuseanordnung eine Zwischenwand aufweist, die zumindest einen Teil der Schmiermittelgeometrie umfasst, wobei die Zwischenwand radial innen einen Ringabschnitt mit einer Durchgangsöffnung aufweist, durch welche die Ausgangswelle hindurchgeführt ist, wobei zwischen dem Ringabschnitt der Zwischenwand und der Ausgangswelle ein Ringspalt gebildet ist, durch den Schmiermittel aus der Getriebeeinheit zur ersten Mündung in den Ringkanal fließen kann.

Ein Vorteil des Elektroantriebs besteht darin, dass Schmiermittel aus dem Inneren der Getriebeeinheit auch in von der Getriebeeinheit entfernt liegende Bereiche des Elektroantriebs gelangen kann, um dort drehende Bauteile wie Lager beziehungsweise Dichtungen zu schmieren. Es kann gegebenenfalls auf separate Schmiermittelkammern oder separate Schmiermittelpumpen verzichtet werden, so dass sich insgesamt ein einfacher Aufbau des Elektroantriebs ergibt. Mit Schmiermittel soll insbesondere jedes fließfähige Mittel mit umfasst sein, dass zur Kühlung beziehungsweise Schmierung drehender Bauteile des Elektroantriebs geeignet ist. Beispielsweise kann das Schmiermittel ein Öl sein. Die genannte Schmiermittelleitgeometrie soll insbesondere alle technischen Mittel mit umfassen, die geeignet sind oder dazu beitragen, Schmiermittel gezielt in den Mündungsbereich zwischen der Hohlwelle und der Ausgangswelle zu leiten, so dass es in den Ringkanal einströmen kann.

Die Durchgangsöffnung der Zwischenwand ist so dimensioniert, dass durch den zwischen der Zwischenwand und der Ausgangswelle gebildeten Ringspalt Schmiermittel aus der Getriebeeinheit in Richtung zum Ringkanal fließen kann.

Die Zwischenwand kann einen zur Drehachse koaxialen und sich in axialer Richtung erstreckenden Hülsenansatz aufweisen, welcher in eine stirnseitige Ausnehmung der Hohlwelle mit axialer Überdeckung eingreift. Der Hülsenansatz und die Hohlwelle überlappen sich in axiale Richtung unter Ausbildung eines kleinen Spalts. Durch die axiale Überdeckung des Hülsenansatzes mit der stirnseitigen Ausnehmung der Hohlwelle wird eine Labyrinthdichtung gebildet. Die Labyrinthdichtung verhindert, dass in Richtung Ringkanal strömendes Schmiermittel durch den zwischen dem ortsfesten Hülsenansatz und der drehenden Hohlwelle gebildeten Spalt vor der Einmündung in den Ringkanal nach radial außen entflieht. Insofern hat die Labyrinthdichtung eine Drosselwirkung für Schmiermittel in dem Spalt zwischen Hülsenansatz und Hohlwelle, so dass eine Schmiermittelzuführung in die erste Mündung des Ringkanals besonders unterstützt wird. Es ist insbesondere vorgesehen, dass der Hülsenansatz der Zwischenwand einen Außendurchmesser aufweist, der kleiner ist als ein Innendurchmesser der stirnseitigen Ausnehmung der Hohlwelle. Ferner ist insbesondere vorgesehen, dass zwischen einem stirnseiteigen Ende des Hülsenansatzes und einer Radialfläche der Ausnehmung ein Radialspalt gebildet ist. Prinzipiell könnte zwischen der Hohlwelle und dem Hülsenansatz auch ein Gleitlager gebildet sein.

Für eine zuverlässige Schmiermittelversorgung durch den Ringkanal kann die Hohlwelle in einem der Getriebeeinheit zugewandten Endabschnitt einen nach radial innen vorstehenden Kragen aufweisen. Der Kragen ist vorzugsweise von der Stirnseite der Hohlwelle axial beabstandet und kann eine die stirnseitige Ausnehmung axial begrenzende Seitenfläche bilden. Die axiale Tiefe der Ausnehmung, beziehungsweise der axiale Abstand des Kragens von der Stirnseite, kann beispielsweise mindestens zwei Millimeter, insbesondere mindestens drei Millimeter, und/oder maximal 10 Millimeter betragen. Der Kragen hat einen Innendurchmesser, der kleiner ist als der Innendurchmesser der Ausnehmung beziehungsweise kleiner als der Innendurchmesser des sich vom Kragen in Richtung zur zweiten Mündung erstreckenden Abschnitts der Hohlwelle. Der Radialspalt zwischen der zylindrischen Innenfläche des Kragens und der zylindrischen Außenfläche der Ausgangswelle kann beispielsweise größer als 0,5 mm und/oder kleiner als 1,5 mm sein. Das gleiche kann auch für den zwischen dem Hülsenansatz und der Ausgangswelle gebildeten Ringspalt gelten. Der zwischen der Ausgangswelle und der Hohlwelle gebildete Ringkanal kann beispielsweise eine radiale Erstreckung von größer als 1,0 mm und/oder kleiner als 2,0 mm haben. Es versteht sich, dass die genannten Größen nur beispielhaft sind und je nach Schmiermittelbedarf und Länge der Hohlwelle auch entsprechend abgewandelt werden können.

Nach einer möglichen Ausführungsform weist die Getriebeeinheit ein Übersetzungsgetriebe und ein Differentialgetriebe auf, wobei das Übersetzungsgetriebe die Getriebewelle aufweist und ausgestaltet ist, um ein vom Antriebsrad eingeleitetes Drehmoment ins Langsame zu übersetzen, wobei das Differentialgetriebe ein Eingangsteil, das von der Getriebewelle drehend antreibbar ist, und mehreren Ausgangsteile aufweist, die von dem Eingangsteil um die Drehachse drehend antreibbar sind, wobei die zumindest eine Ausgangswelle ein erstes Ende aufweist, das mit einem der Ausgangsteile des Differentialgetriebes zur Drehmomentübertragung drehfest verbunden ist. Das Übersetzungsgetriebe ist ausgestaltet, um eine Übersetzung ins Langsame zu erzeugen. Somit dreht das Eingangsteil des Differentialgetriebes um ein Vielfaches langsamer als die Motorwelle des Elektromotors. Das Differentialgetriebe teilt das eingeleitete Drehmoment auf zwei Ausgangsteile auf, welche als Seitenwellenräder gestaltet sein können. Die Seitenwellenräder dienen zum Antreiben einer zugehörigen Seitenwellen beziehungsweise eines damit verbundenen Rads des Kraftfahrzeugs. Die durch die Hohlwelle hindurchgeführte Ausgangswelle ist mit einem ersten Seitenwellenrad des Differentialgetriebes drehfest verbunden und treibt eine erste Seitenwelle an. Das gegenüberliegende zweite Seitenwellenrad dient zum Antreiben einer zweiten Seitenwelle.

Die Gehäuseanordnung des Elektroantriebs kann mehrteilig aus einzelnen Gehäuseteilen gestaltet sein, die beispielsweise über Flanschverbindungen miteinander verbunden werden können. Die Zwischenwand der Gehäuseanordnung kann an einer dem Elektromotor abgewandten, beziehungsweise dem Differentialgetriebe zugewandten Seite eine Kammer aufweisen, die ausgestaltet ist, um aufgrund von Rotation drehender Teile der Getriebeeinheit verspritztes Schmiermittel temporär aufzunehmen. Insbesondere ist vorgesehen, dass die Zwischenwand zumindest einen Durchtrittskanal aufweist, welcher mit einem radial außen liegenden Ende in der Kammer mündet und durch den Schmiermittel aus der Kammer zur Durchgangsöffnung der Zwischenwand in den Bereich der ersten Mündung fließen kann. Die Kammer bildet somit einen Stauraum für Schmiermittel, welches dann nach und nach zur ersten Mündung beziehungsweise in den Ringkanal fließen kann. Die Gehäuseanordnung kann ferner einen Schmiermittelsammelabschnitt aufweisen, der ausgestaltet ist, um verspritztes Schmiermittel zu sammeln und in die Kammer zu leiten. Der Schmiermittelsammelabschnitt kann in einem axialen Überdeckungsbereich mit dem Antriebsrad für das Differentialgetriebe angeordnet sein, um möglichst eine große Schmiermittelmenge aufzufangen.

Nach einer möglichen Ausgestaltung kann im Leistungspfad zwischen dem Elektromotor und der zumindest einen Ausgangswelle eine Kupplung vorgesehen sein, die ausgestaltet ist, um eine Drehmomentübertragung wahlweise herzustellen oder zu unterbrechen. Konkret kann die Kupplung im Leistungspfad zwischen dem Übersetzungsgetriebe und dem Differentialträger anordnet sein, wobei andere Möglichkeiten nicht ausgeschlossen sind. Die Kupplung ist mittels eines steuerbaren Aktuators betätigbar, wobei der Aktuator einen Elektromagneten aufweisen kann. Der Elektromagnet kann mit der Zwischenwand der Gehäuseanordnung derart verbunden sein, dass ein Teilabschnitt des Magnetgehäuses und ein Teilabschnitt der Zwischenwand die Schmiermittelkammer bilden.

Die durch die Hohlwelle durchgesteckte Ausgangswelle hat einen von der Getriebeeinheit entfernten zweiten Endabschnitt, der in einem Lageraufnahmeteil der Gehäuseanordnung mittels eines Wellenlagers um die Drehachse drehbar gelagert ist. Die Hohlwelle erstreckt sich vorzugsweise axial bis in das Lageraufnahmeteil hinein, das heißt ein Endabschnitt der Hohlwelle liegt in axialer Überdeckung mit dem Lageraufnahmeteil. Die drehend antreibbare Hohlwelle ist gegenüber dem ortsfesten Lageraufnahmeteil mittels einer Drehdichtung abgedichtet, die als Radialwellendichtring gestaltet sein kann. Vorzugsweise befindet sich das stirnseitige Ende der Hohlwelle, das heißt die Ausgangsmündung des Ringkanals, axial zwischen der Drehdichtung und dem Wellenlager für die Ausgangswelle, so dass diese Bauteile gut geschmiert werden. Seitlich benachbart zum Wellenlager ist eine weitere Drehdichtung vorgesehen, mit welcher der Ringraum zwischen der Ausgangswelle und dem Lageraufnahmeteil abgedichtet ist.

Die Gehäuseanordnung kann nach einer Ausführungsform ein mittleres Deckelteil aufweisen, das zwischen einem ersten Gehäuseabschnitt, in dem der Elektromotor aufgenommen ist, und einem zweiten Gehäuseabschnitt, in dem das Übersetzungsgetriebe und das Differentialgetriebe aufgenommen sind, angeordnet ist. Das Deckelteil kann einen Lageraufnahmeabschnitt aufweisen, in dem die Hohlwelle drehbar gelagert ist. Konkret kann vorgesehen sein, dass die Hohlwelle einen mit einem Rotor des Elektromotors drehfest verbundenen Wellenabschnitt, einen in dem Lageraufnahmeabschnitt drehbar gelagerten Lagerabschnitt und das Antriebsrad aufweist, wobei das Antriebsrad einstückig mit der Hohlwelle ausgebildet ist und in eine zwischen dem Deckelteil und der Zwischenwand gebildete Kammer frei hineinragt.

Ein bevorzugtes Ausführungsbeispiel wird nachstehend anhand der Zeichnungsfiguren erläutert. Hierin zeigt
- Figur 1: schematisch einen erfindungsgemäßen Elektroantrieb im Längsschnitt;
- Figur 2: ein Detail des Elektroantriebs gemäß Figur 1 mit Schmiermittelversorgung außenliegender Bauteile in vergrößerter Darstellung; und
- Figur 3: den Mündungsbereich aus Figur 2 als Detail in vergrößerter Darstellung.

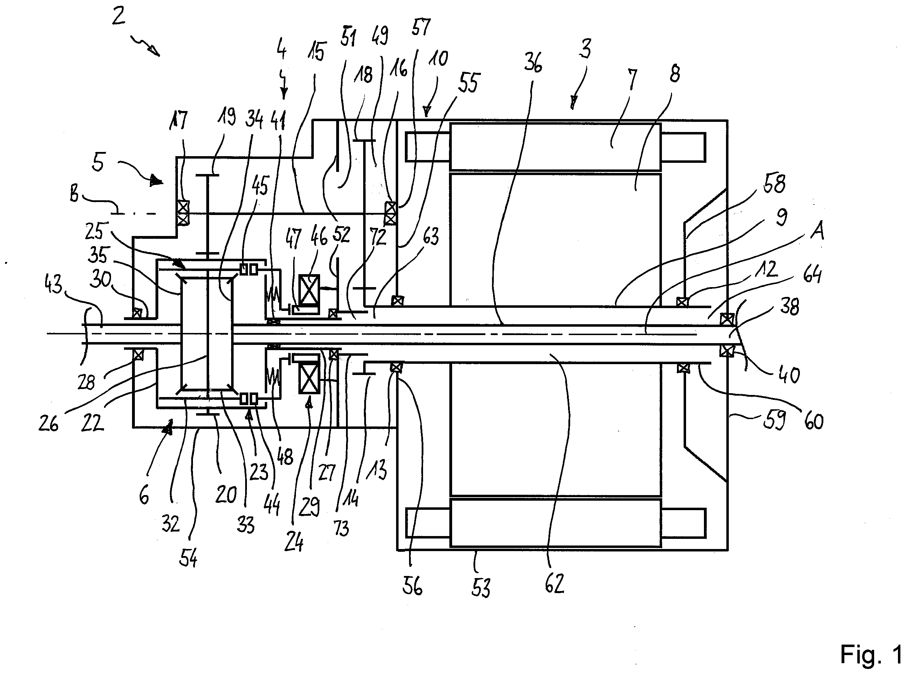

Die Figuren 1 bis 3 werden nachstehend gemeinsam beschrieben. Figur 1 zeigt einen erfindungsgemäßen Elektroantrieb 2 mit einem Elektromotor 3 und einer von dem Elektromotor drehend antreibbaren Getriebeeinheit 4 in schematischer Darstellung. Die Getriebeeinheit 4 umfasst ein Übersetzungsgetriebe 5 und ein im Leistungspfad nachgelagertes Differentialgetriebe 6, ohne jedoch hierauf eingeschränkt zu sein. Der Elektroantrieb 2 kann als alleinige Antriebsquelle oder mit einer zusätzlichen Antriebsquelle zum Antreiben des Kraftfahrzeugs verwendet werden.

Der Elektromotor 3 umfasst einen Stator 7 und einen hierzu drehbaren Rotor 8, der bei Bestromen des Elektromotors eine Motorwelle 9 drehend antreibt. Die Drehbewegung der Motorwelle 9 wird über das im Leistungspfad nachgelagerte Übersetzungsgetriebe 5 auf das Differentialgetriebe 6 übertragen. Der Elektromotor 3 wird von einer Batterie (nicht dargestellt) mit elektrischem Strom versorgt, wobei die Batterie im Generatorbetrieb auch vom Elektromotor aufgeladen werden kann. Der Elektroantrieb 2 umfasst ferner eine Gehäuseanordnung 10, in dem der Elektromotor 3 und die Getriebeeinheit 4 angeordnet sind.

Das Übersetzungsgetriebe 5 ist derart gestaltet, dass eine von der Motorwelle 9 eingeleitete Drehbewegung vom Schnellen ins Langsame übersetzt wird, weswegen das Getriebe auch als Untersetzungsgetriebe bezeichnet werden kann. Die Motorwelle 9 ist als Hohlwelle gestaltet und mittels Lager 12, 13 in der Gehäuseanordnung 10 des Elektroantriebs 2 um eine Drehachse A drehbar gelagert. Ein Antriebsrad 14 (erstes Zahnrad) ist drehfest mit der Antriebswelle 9 verbunden, insbesondere einteilig mit dieser gestaltet.

Das Übersetzungsgetriebe 5 umfasst eine Getriebewelle 15, die über Lager 16, 17 um eine zur ersten Drehachse A parallele zweite Drehachse B in der Gehäuseanordnung 10 drehbar gelagert ist und auch als Zwischenwelle bezeichnet werden kann. Die Getriebewelle 15 umfasst ein Antriebsrad 18 (zweites Zahnrad) und ein Abtriebsrad 19 (drittes Zahnrad), die drehfest mit der Getriebewelle verbunden sind, insbesondere einteilig mit dieser ausgestaltet sind. Das Abtriebsrad 19 kämmt mit einem Ringrad 20 (viertes Zahnrad) zum Antreiben des Differentialgetriebes 6.

Das Antriebsrad 14 der Motorwelle 9 und das hiermit kämmende Antriebsrad 18 der Getriebewelle 15 bilden eine erste Zahnradpaarung des Übersetzungsgetriebes 5 mit einem ersten Übersetzungsverhältnis i1. Das Abtriebsrad 19 der Getriebewelle 15 und das hiermit kämmende Ringrad 20 bilden eine zweite Zahnradpaarung i2. Es ist erkennbar, dass das Motorwellen-Antriebsrad 14 einen wesentlich kleineren Durchmesser beziehungsweise eine geringere Zähnezahl aufweist als der Durchmesser beziehungsweise die Zähnezahl des Getriebewellen-Antriebsrads 18. Auf diese Weise wird eine Übersetzung ins Langsame erzeugt. Ebenso hat das Getriebewellen-Abtriebsrad 19 einen kleineren Durchmesser beziehungsweise eine geringere Zähnezahl als das Ringrad 20, so dass hier eine weitere Übersetzung ins Langsame erfolgt.

Das Differentialgetriebe 6 umfasst ein Differentialgehäuse 22, das fest mit dem Ringrad 20 verbunden und von dem Abtriebsrad 19 um die Drehachse A drehend antreibbar ist, und eine Differentialeinheit 25, die in dem Differentialgehäuse 22 aufgenommen ist. Im Leistungspfad zwischen dem Differentialgehäuse 22 und der Differentialeinheit 25 ist eine steuerbare Kupplung 23 vorgesehen, die von einem Aktuator 24 betätigbar ist. Das Differentialgehäuse 22 ist mittels Lager 27, 28 um die Drehachse A in dem ortsfesten Gehäuse 10 drehbar gelagert. Das Differentialgehäuse 22 kann zweiteilig gestaltet sein und ein erstes Gehäuseteil umfassen, das einteilig mit dem Ringrad 20 gestaltet ist, und ein zweites Gehäuseteil, die fest miteinander verbunden sind. Die beiden Gehäuseteile haben jeweils einen Hülsenansatz 29, 30, mit dem sie in dem jeweils zugehörigen Lager 27, 28 drehbar aufgenommen sind. In dem Differentialgehäuse 22 ist die Differentialeinheit 25 koaxial zur Drehachse A angeordnet.

Die Differentialeinheit 25 umfasst einen Differentialträger 32 als Eingangsteil, der relativ zum Differentialgehäuse 25 drehbar gelagert ist, mehrere mit dem Differentialträger 32 verbundene Differentialräder 33, die auf mit dem Differentialträger 32 verbundenen Zapfen 26 drehbar gelagert sind, sowie ein erstes und ein zweites Seitenwellenrad 34, 35 als Ausgangsteile, die von den Differentialrädern 33 um die Drehachse A drehend antreibbar sind. Das erste Seitenwellenrad 34 ist mit einer Ausgangswelle 36 drehfest verbunden, die koaxial zur Drehachse A angeordnet ist und durch die als Hohlwelle ausgebildete Motorwelle 9 durchgesteckt ist. Die Ausgangswelle 36 hat einen getriebeseitigen ersten Endabschnitt 37, der mittels eines Lagers 41 in dem Getriebegehäuse 22 drehbar gelagert ist, und einen vom Getriebe entfernt liegenden Endabschnitt 38, der mittels eines Lagers 40 in der Gehäuseanordnung 10 um die Drehachse A drehbar gelagert ist. An dem außenliegenden Endabschnitt 38 ist das Gelenkaußenteil 42 eines Gleichlaufgelenks erkennbar, das zur Drehmomentübertragung auf eine erste Seitenwelle (nicht dargestellt) des Kraftfahrzeugs unter Winkelbewegung dient. Das zweite Seitenwellenrad 35 ist mit einem Wellenzapfen 43 drehfest verbunden, der eingeleitetes Drehmoment über ein Gleichlaufgelenk auf eine zweite Seitenwelle (nicht dargestellt) überträgt.

Die Kupplung 23 ist als formschlüssige Kupplung gestaltet, wobei auch andere Kupplungen einsetzbar sind, welche geeignet sind, eine Drehmomentübertragung im Leistungspfad zwischen dem Elektromotor 3 und den Seitenwellen des Kraftfahrzeugs nach Bedarf herzustellen oder zu unterbrechen. Die Kupplung 23 umfasst ein erstes Kupplungsteil 44, das mit dem Differentialgehäuse 22 drehfest und axial beweglich verbunden ist, sowie ein zweites Kupplungsteil 45, das mit dem Differentialträger 32 fest verbunden ist, insbesondere einteilig mit diesem gestaltet ist. Das erste Kupplungsteil 44 kann zur Übertragung eines Drehmoments in das zweite Kupplungsteil 45 eingerückt werden, wobei eine formschlüssige Verbindung zwischen den beiden Kupplungsteilen entsteht. Durch erneutes Ausrücken des ersten Kupplungsteils 44 kann die Drehmomentübertragung wieder unterbrochen werden. Das zweite Kupplungsteil 45 hat als Formschlussmittel einen Zahnring, der an einer Stirnseite des Differentialträgers 32 einteilig angeformt ist. Entsprechend hat das erste Kupplungsteil 44 einen gegengleichen Zahnring, der innerhalb des Differentialgehäuses 22 angeordnet ist. Weiter hat das erste Kupplungsteil 44 mehrere über den Umfang verteilte axiale Ansätze, die durch entsprechende Durchgangsöffnungen des Differentialgehäuses 22 hindurchtreten. Der elektromagnetische Aktuator 24 wirkt bei Betätigung auf die axialen Ansätze des ersten Kupplungsteils 44 ein, um dieses axial zu bewegen. Durch Betätigung des Aktuators 24 wird das erste Kupplungsteil 44 eingerückt, so dass eine Drehmomentübertragung vom Antriebsrad 20 auf die Differentialeinheit 25 unterbrochen ist. In unbetätigtem Zustand wird das erste Kupplungsteil 44 von Federmitteln 48 in den ausgerückten Zustand beaufschlagt. An den axialen Ansätzen des ersten Kupplungsteils 44 kann ein Geberelement befestigt sein, das mit einem Sensor (nicht dargestellt) zusammenwirkt, so dass die Position der Kupplung bestimmt werden kann.

Der Aktuator 24 umfasst einen Elektromagneten 46 sowie einen Kolben 47, der bei Bestromen des Elektromagneten 46 in Richtung Kupplung 23 beaufschlagt wird. Der Elektromagnet 46 hat ein ringförmiges Gehäuse, das mit einer Zwischenwand 52 der Gehäuseanordnung 10 verbunden ist.

Es ist in Figur 1 erkennbar, dass die Gehäuseanordnung 10 aus mehreren einzelnen Gehäuseteilen zusammengesetzt ist. Insbesondere umfasst die Gehäuseanordnung 10 einen ersten Gehäuseabschnitt 53, in dem der Elektromotor 3 aufgenommen ist, und einen zweiten Gehäuseabschnitt 54, in dem die Getriebeeinheit 4 aufgenommen ist, sowie ein Deckelteil 55, das zwischen dem ersten und zweiten Gehäuseabschnitt 53, 54 angeordnet und mit diesen fest verbunden ist. Das Deckelteil 55 weist einen ersten Lageraufnahmeabschnitt 56 auf, in dem die Hohlwelle 9 mittels des Lagers 13 um die Drehachse A drehbar gelagert ist, sowie einen zweiten Lageraufnahmeabschnitt 57, in dem die Getriebewelle 15 mittels des Lagers 16 um die Drehachse B drehbar gelagert ist. Axial zwischen dem Deckelteil 55 und der Zwischenwand 52 ist ein Aufnahmeraum 49 gebildet, in dem die Antriebsräder 14, 18 aufgenommen sind. Die Zwischenwand 52 hat einen Lageraufnahmeabschnitt, in dem das Lager 27 zur drehbaren Lagerung des Differentialgehäuses 22 aufgenommen ist, sowie eine Durchgangsöffnung 51, durch welche die Getriebewelle 15 hindurchgeführt ist. Die Durchgangsöffnung 51 hat einen größeren Innendurchmesser als der Außendurchmesser des Zahnrads 19, so dass die Getriebewelle 15 mit Zahnrad 19 durch die Öffnung 51 montiert werden kann.

An dem von der Getriebeeinheit 4 entfernt liegenden Ende hat die Gehäuseanordnung 10 ein weiteres Deckelteil 58 in dem das Lager 12 für die Hohlwelle 9 aufgenommen ist, sowie ein hiermit verbundenes Lageraufnahmeteil 59, in dem das Lager 40 für die Ausgangswelle 36 aufgenommen ist. Die Hohlwelle 9 hat einen ersten Endabschnitt 60, der mittels des Wellenlagers 12 in dem Gehäuseteil 58 drehbar gelagert ist, einen mit dem Rotor 8 drehfest verbundenen Wellenabschnitt, einen in dem Lageraufnahmeabschnitt 56 des Deckelteils 55 drehbar gelagerten Abschnitt und das Antriebsrad 14, das in den zwischen Deckelteil 55 und Zwischenwand 52 gebildeten Aufnahmeraum 49 hineinragt.

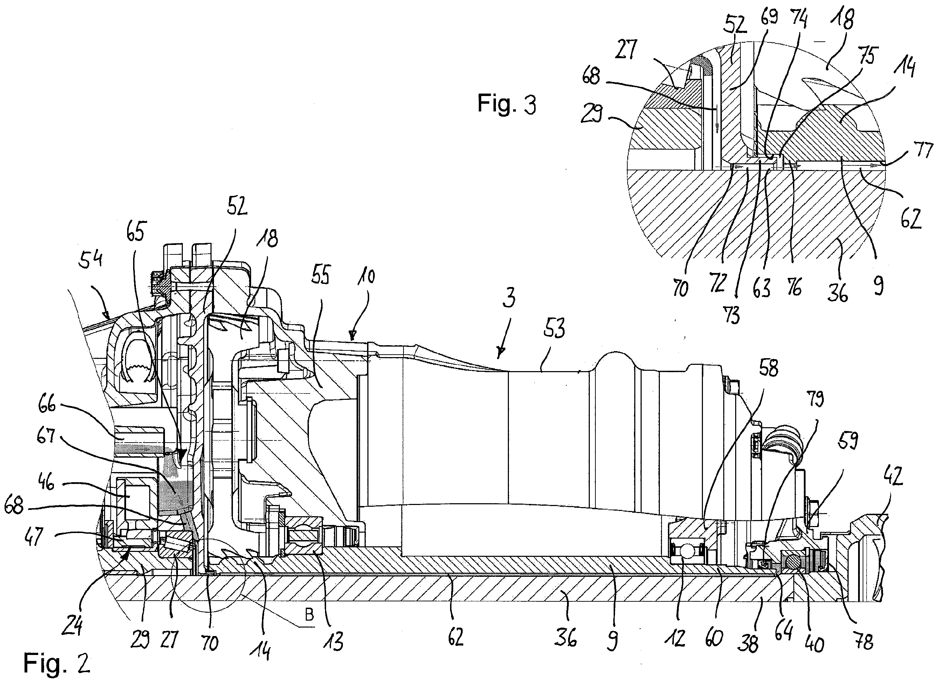

Wie insbesondere in den Figuren 2 und 3 erkennbar, ist zwischen der Hohlwelle 9 und der Ausgangswelle 36 ein Ringkanal 62 gebildet, der eine der Getriebeeinheit 4 zugewandten erste Mündung 63 und eine von der Getriebeeinheit entfernt liegende zweite Mündung 64 aufweist. Die Gehäuseanordnung 10 weist eine Schmiermittelleitgeometrie 65 auf, die ausgestaltet ist, um Schmiermittel aus der Getriebeeinheit 4 in den Mündungsbereich der ersten Mündung 63 zu leiten. Das Schmiermittel kann somit durch die zwischen Hohlwelle 9 und Ausgangswelle 36 gebildete Öffnung hinein und entlang des Ringkanals 62 zur zweiten Mündung 64 fließen. Auf diese Weise wird es ermöglicht, auch von der Getriebeeinheit 4 entfernt liegende Teile der Antriebsanordnung 2 mit Schmiermittel zu versorgen.

Im zweiten Gehäuseabschnitt 54 ist ein Schmiermittelsammelabschnitt 66 gebildet, in dem innerhalb der Getriebeeinheit 4 aufgrund von Rotation drehender Getriebeteile verspritztes Schmiermittel gesammelt und über einen Rinnenabschnitt in Richtung zur Zwischenwand 52 geleitet wird. Der Schmiermittelsammelabschnitt 66 ist in einem axialen Überdeckungsbereich mit der Getriebewelle 15, beziehungsweise mit dem Ringrad 20 des Differentialgetriebes 6 angeordnet, um möglichst eine große Schmiermittelmenge aufzufangen. Die Zwischenwand 52 weist an der dem Differentialgetriebe 6 zugewandten Seite eine Schmiermittelkammer 67 auf, in die das Schmiermittel aus dem Sammelabschnitt 66 hineinfließen kann und dort temporär aufgenommen wird. Die Kammer 67 ist in axialer Richtung auf einer Seite von einem Wandungsabschnitt der Zwischenwand 52 und auf der anderen Seite von einem Wandungsabschnitt des Elektromagneten 46 seitlich begrenzt. Radial innen ist ein Durchtrittskanal 68 vorgesehen, welcher mit einem ersten Ende mit der Kammer 67 verbunden ist und mit einem zweiten Ende zu einem radial innen liegenden Ringabschnitt 69 der Zwischenwand 52 führt. Die Fließrichtung des Schmiermittels ist in den Figuren 2 und 3 mit Pfeilen gekennzeichnet.

Die Zwischenwand 52 hat eine Durchgangsöffnung 70, durch welche die Ausgangswelle 36 hindurchgeführt ist. Der Innendurchmesser der Durchgangsöffnung 70 ist größer als der Außendurchmesser der Welle 36 in diesem Abschnitt, so dass zwischen der Welle und der Zwischenwand eine Ringöffnung 72 gebildet ist, durch welche das Schmiermittel in Richtung Hohlwelle 9 beziehungsweise Ringkanal 62 fließen kann. Es ist insbesondere in Figur 3 erkennbar, dass die Zwischenwand 52 radial innen einen zur Drehachse A koaxialen Hülsenansatz 73 aufweist, der sich in axiale Richtung in eine stirnseitige Ausnehmung 74 der Hohlwelle 9 hineinerstreckt. Dabei hat der Hülsenansatz 73 einen Außendurchmesser, der kleiner ist als ein Innendurchmesser der stirnseitigen Ausnehmung 74. In montiertem Zustand überlappen sich der Hülsenansatz 73 und die Hohlwelle 9 in axialer Richtung, wobei zwischen den beiden Bauteilen ein L-förmiger Spalt im Halblängsschnitt gebildet ist. Der zwischen der Zwischenwand 52 und der Hohlwelle 9 gebildete Spalt 75 kann eine Breite von beispielsweise zwischen 0,1 und 0,5 Millimeter aufweisen. Durch das axiale Ineinandergreifen des Hülsenansatzes 73 und der Hohlwelle 9 wird eine Labyrinthdichtung gebildet, so dass der Schmiermittelstrom, welcher durch den Spalt zwischen Hülsenansatz 73 und Hohlwelle 9 fließt, gering gehalten wird. Dabei nimmt die durch den Spalt 75 gebildete Drosselwirkung mit zunehmender Länge der axialen Überdeckung zwischen Hülsenansatz 73 und Hohlwelle 9 zu. Beispielsweise kann die axiale Überdeckung zwischen 2,0 und 10 Millimeter lang sein. Durch die axiale Überdeckung beziehungsweise die damit erzeugte fluidische Drosselwirkung passiert ein größerer Schmiermittelstrom den Spalt 75 in axiale Richtung, um in den zwischen der Hohlwelle 9 und der Ausgangswelle 36 gebildeten Ringspalt 62 und von dort zu den entfernt liegenden zu schmierenden Bauteilen zu gelangen.

An dem der Zwischenwand 52 zugewandten Endabschnitt hat die Hohlwelle 9 einen nach radial innen vorstehenden Kragen 76, welcher die stirnseitige Ausnehmung beziehungsweise den Spalt 75 axial begrenzt. Der Kragen 76 hat einen Innendurchmesser, der kleiner ist als der Innendurchmesser der Ausnehmung 74 und kleiner als der Innendurchmesser des sich vom Kragen axial in Richtung zur zweiten Mündung 64 erstreckenden Abschnitts der Hohlwelle 9. Dabei ist für eine gute Schmiermittelströmung insbesondere vorgesehen, dass der Innendurchmesser des Kragens 76 dem Innendurchmesser des Hülsenansatzes 73 im Wesentlichen entspricht, beziehungsweise, dass der Ringspalt zwischen Hülsenansatz 73 und Welle 9 etwa gleich groß ist wie der Ringspalt zwischen Kragen 76 und Welle 9. Die genannten Ringspalten können beispielsweise größer als 0,5 mm, beziehungsweise kleiner als 1,5 mm sein. Der an den Kragen 76 axial anschließende Abschnitt hat einen größeren Innendurchmesser als der Innendurchmesser des Kragens 76. An dem Kragen 76 axial vorbeifließendes Schmiermittel gelangt in dem Ringkanal 62 aufgrund der Zentrifugalkraft auf einen größeren Durchmesser. Eine an der Innenwandung 77 der Hohlwelle 9 gebildete Schmiermittelsäule kann sich an dem Kragen 76 axial abstützen, so dass aufgrund von immer neu an dem Kragen 76 vorbeiströmenden Schmiermittel ein Schmiermittelstrom durch den Ringkanal 62 bis zum entfernt liegenden Ende der Hohlwelle 9 entsteht. Hier tritt das Schmiermittel aus der Mündung 64 aus und gelangt zum Lager 40 und der Wellendichtung 78.

Insgesamt bietet der genannte Elektroantrieb 2 den Vorteil, dass Schmiermittel aus dem Bereich der Getriebeeinheit 4 auch in entfernt liegende Bereiche gelangen kann, um zu schmierende Bauteile entsprechend mit Schmiermittel zu versorgen.

### Bezugszeichenliste

- 2: Elektroantrieb
- 3: Elektromotor
- 4: Getriebeeinheit
- 5: Übersetzungsgetriebe
- 6: Differentialgetriebe
- 7: Stator
- 8: Rotor
- 9: Motorwelle / Hohlwelle
- 10: Gehäuseanordnung

- 12: Lager
- 13: Lager
- 14: Antriebsrad (erstes Zahnrad)
- 15: Getriebewelle
- 16: Lager
- 17: Lager
- 18: Antriebsrad (zweites Zahnrad)
- 19: Abtriebsrad (drittes Zahnrad)
- 20: Ringrad (viertes Zahnrad)

- 22: Differentialgehäuse
- 23: Kupplung
- 24: Aktuator
- 25: Differentialeinheit
- 26: Zapfen
- 27: Lager
- 28: Lager
- 29: Hülsenansatz
- 30: Hülsenansatz

- 32: Differentialträger
- 33: Differentialräder
- 34: Ausgangsteil / Seitenwellenrad
- 35: Ausgangsteil / Seitenwellenrad
- 36: Ausgangswelle
- 37: erster Endabschnitt
- 38: zweiter Endabschnitt

- 40: Lager
- 41: Lager
- 42: erstes Gleichlaufgelenk
- 43: Wellenzapfen
- 44: erstes Kupplungsteil
- 45: zweites Kupplungsteil
- 46: Elektromagnet
- 47: Kolben
- 48: Federmittel
- 49: Aufnahmeraum

- 51: Durchgangsöffnung
- 52: Zwischenwand
- 53: erster Gehäuseabschnitt
- 54: zweiter Gehäuseabschnitt
- 55: Deckelteil
- 56: erster Lageraufnahmeabschnitt
- 57: zweiter Lageraufnahmeabschnitt
- 58: Deckelteil
- 59: Lageraufnahmeteil
- 60: Endabschnitt

- 62: Ringkanal
- 63: erste Mündung
- 64: zweite Mündung
- 65: Schmiermittelleitgeometrie
- 66: Schmiermittelsammelabschnitt
- 67: Schmiermittelkammer
- 68: Durchtrittskanal
- 69: Ringabschnitt
- 70: Durchgangsöffnung
- 72: Ringöffnung
- 73: Hülsenansatz
- 74: Ausnehmung
- 75: Spalt
- 76: Kragen
- 77: Innenwandung
- 78: Wellendichtung

- A: Drehachse
- B: Drehachse

## Patentansprüche

1. Elektroantrieb zum Antreiben eines Kraftfahrzeugs, umfassend:
eine Gehäuseanordnung (10);
einen Elektromotor (3) mit einer als Hohlwelle (9) ausgebildeten Motorwelle, die um eine Drehachse (A) drehbar antreibbar ist und mit einem Antriebsrad (14) verbunden ist;
eine Getriebeeinheit (4) mit zumindest einer Getriebewelle (15), die von dem Antriebsrad (14) drehend antreibbar ist, und mit zumindest einer Ausgangswelle (36), wobei sich die Ausgangswelle (36) durch die Hohlwelle (9) hindurch erstreckt; wobei zwischen der Hohlwelle (9) und der Ausgangswelle (36) ein Ringkanal (62) gebildet ist, mit einer der Getriebeeinheit (4) zugewandten ersten Mündung (63) und einer von der Getriebeeinheit (4) entfernten zweiten Mündung (64);
wobei die Gehäuseanordnung (10) eine Schmiermittelleitgeometrie (67, 68) und eine Zwischenwand (52) aufweist, die zumindest einen Teil der Schmiermittelleitgeometrie umfasst, wobei die Zwischenwand (52) radial innen einen Ringabschnitt (69) mit einer Durchgangsöffnung aufweist, durch welche die Ausgangswelle (36) hindurchgeführt ist;
**dadurch gekennzeichnet, dass** die Schmiermittelleitgeometrie (67, 68) ausgestaltet ist, um Schmiermittel in einen Mündungsbereich der ersten Mündung (63) des Ringkanals (62) zu leiten, so dass das Schmiermittel durch den Ringkanal (62) zu der zweiten Mündung (64) fließen kann, wobei zwischen dem Ringabschnitt (69) der Zwischenwand (52) und der Ausgangswelle (36) ein Ringspalt (72) gebildet ist, durch den das Schmiermittel aus der Getriebeeinheit (4) zur ersten Mündung (63) in den Ringkanal (62) fließen kann.

2. Elektroantrieb nach Anspruch 1, **dadurch gekennzeichnet, dass** die Zwischenwand (52) einen zur Drehachse (A) koaxialen und sich in axialer Richtung erstreckenden Hülsenansatz (73) ausweist, welcher in eine stirnseitige Ausnehmung (74) der Hohlwelle (9) mit axialer Überdeckung eingreift.

3. Elektroantrieb nach Anspruch 1 oder 2, **dadurch gekennzeichnet, dass** die Hohlwelle (9) in einem der Getriebeeinheit (4) zugewandten Endabschnitt einen nach radial innen vorstehenden Kragen (76) aufweist.

4. Elektroantrieb nach Anspruch 3, **dadurch gekennzeichnet, dass** der Kragen (76) von einer Stirnseite der Hohlwelle (9) axial beabstandet ist und die stirnseitige Ausnehmung (74) axial begrenzt.

5. Elektroantrieb nach Anspruch 3 oder 4, **dadurch gekennzeichnet, dass** der Kragen (76) einen Innendurchmesser aufweist, der kleiner ist als ein Innendurchmesser der Ausnehmung (74) und kleiner als ein Innendurchmesser des sich vom Kragen (76) in Richtung zur zweiten Mündung (64) erstreckenden Abschnitts der Hohlwelle (9).

6. Elektroantrieb nach einem der Ansprüche 1 bis 5, **dadurch gekennzeichnet, dass** die Getriebeeinheit (4) ein Übersetzungsgetriebe (5) und ein Differentialgetriebe (6) aufweist, wobei das Übersetzungsgetriebe (5) die Getriebewelle (15) aufweist und ausgestaltet ist, um ein vom Antriebsrad (14) eingeleitetes Drehmoment ins Langsame zu übersetzen, wobei das Differentialgetriebe (6) ein Eingangsteil (22), das von der Getriebewelle (15) drehend antreibbar ist, und mehreren Ausgangsräder (34, 35) aufweist, die von dem Eingangsteil (22) um die Drehachse (A) drehend antreibbar sind, wobei die zumindest eine Ausgangswelle (36) einen ersten Endabschnitt aufweist, der mit einem der Ausgangsteile (35) zur Drehmomentübertragung drehfest verbunden ist.

7. Elektroantrieb nach einem der Ansprüche 1 bis 6, **dadurch gekennzeichnet, dass** die Zwischenwand (52) an einer dem Elektromotor (3) abgewandten Seite eine Schmiermittelkammer (67) aufweist, die ausgestaltet ist, um bei Rotation drehender Teile der Getriebeeinheit (4) verspritztes Schmiermittel temporär aufzunehmen.

8. Elektroantrieb nach einem der Ansprüche 1 bis 7, **dadurch gekennzeichnet, dass** die Zwischenwand (52) zumindest einen Durchtrittskanal (68) aufweist, welcher mit einem radial außen liegenden Ende in der Schmiermittelkammer (67) mündet und durch den Schmiermittel aus der Schmiermittelkammer zur Durchgangsöffnung der Zwischenwand (52) in den Bereich der ersten Mündung (63) fließen kann.

9. Elektroantrieb nach einem der Ansprüche 7 oder 8, **dadurch gekennzeichnet, dass** die Gehäuseanordnung (10) einen Schmiermittelsammelabschnitt (66) aufweist, der ausgestaltet ist, um verspritztes Schmiermittel zu sammeln und in die Schmiermittelkammer (67) zu leiten.

10. Elektroantrieb nach einem der Ansprüche 1 bis 9, **dadurch gekennzeichnet, dass** im Leistungspfad zwischen dem Elektromotor (4) und der zumindest einen Ausgangswelle (36) eine Kupplung (23) vorgesehen ist, die ausgestaltet ist, um eine Drehmomentübertragung zwischen dem Elektromotor (4) und der zumindest einen Ausgangswelle (36) wahlweise herzustellen oder zu unterbrechen.

11. Elektroantrieb nach Anspruch 7 und 10, **dadurch gekennzeichnet, dass** die Kupplung (23) mittels eines steuerbaren Aktuators (24) betätigbar ist, wobei der Aktuator einen Elektromagneten (46) aufweist, der mit der Zwischenwand der Gehäuseanordnung (10) verbunden ist, wobei ein Teilabschnitt des Magnetgehäuses und ein Teilabschnitt der Zwischenwand (52) die Schmiermittelkammer (67) bilden.

12. Elektroantrieb nach einem der Ansprüche 1 bis 11, **dadurch gekennzeichnet, dass** die Ausgangswelle (36) einen von der Getriebeeinheit (4) entfernten zweiten Endabschnitt (38) aufweist, der in einem Lageraufnahmeteil (59) der Gehäuseanordnung (10) mittels eines Wellenlagers (40) um die Drehachse (A) drehbar gelagert ist, wobei sich die Hohlwelle (9) axial bis in das Lageraufnahmeteil (59) hineinerstreckt.

13. Elektroantrieb nach Anspruch 12, **dadurch gekennzeichnet, dass** die Hohlwelle (9) mittels einer Drehdichtung (79) gegenüber dem Lageraufnahmeteil (59) abgedichtet ist, wobei die zweite Mündung (64) des Ringkanals (62) axial zwischen der Drehdichtung (79) und dem Wellenlager (40) angeordnet ist.

14. Elektroantrieb nach einem der Ansprüche 1 bis 13, **dadurch gekennzeichnet, dass** die Gehäuseanordnung (10) ein Deckelteil (55) aufweist, das zwischen einem ersten Gehäuseabschnitt (53), in dem der Elektromotor (3) aufgenommen ist, und einem zweiten Gehäuseabschnitt (54), in dem die Getriebeeinheit (4) aufgenommen ist, angeordnet ist, wobei das Deckelteil (55) einen Lageraufnahmeabschnitt (56) aufweist,
wobei die Hohlwelle (9) einen mit einem Rotor (8) des Elektromotors (3) verbundenen Wellenabschnitt, einen in dem Lageraufnahmeabschnitt (56) drehbar gelagerten Lagerabschnitt und das Antriebsrad (14) aufweist, wobei das Antriebsrad (14) in eine zwischen dem Deckelteil (55) und der Zwischenwand (52) gebildete Kammer frei hineinragt.

## Claims

1. Electric drive for driving a motor vehicle, comprising:
a housing assembly (10);
an electric motor (3) with a motor shaft provided in the form of a hollow shaft (9), which is rotatingly drivable around a rotational axis (A) and which is connected to a drive gear (14);
a transmission unit (4) with at least one transmission shaft (15) which is rotatingly drivable by the drive gear (14), and with at least one output shaft (36), wherein the output shaft (36) extends through the hollow shaft (9); wherein an annular channel (62) is formed between the hollow shaft (9) and the output shaft (36), having a first opening (63) facing the transmission unit (4) and a second opening (64) facing away from the transmission unit (4);
wherein the housing assembly (10) comprises a lubricant guiding geometry (67, 68) and an intermediate wall (52) which comprises at least part of the lubricant guiding geometry, wherein the intermediate wall (52), radially inside, comprises an annular portion (69) with a through-aperture through which the output shaft (36) extends through;
**characterized in that** the lubricant guiding geometry (67, 68) is configured to guide lubricant into a mouth region of the first opening (63) of the annular channel (62), so that the lubricant can flow through the annular channel (62) to the second opening (64), wherein between the annular portion (69) of the intermediate wall (52) and the output shaft (36) an annular gap (72) is formed through which lubricant can flow out of the transmission unit (4) into the annular channel (62).

2. Electric drive according to claim 1, **characterised in that** the intermediate wall (52) comprises a sleeve projection (73) which extends coaxially relative to the rotational axis (A) in an axial direction and which engages an end side recess (74) of the hollow shaft (9) with an axial overlap.

3. Electric drive according to claim 1 or 2, **characterised in that** the hollow shaft (9) comprises a radially inwardly projecting collar (76) at an end portion facing the transmission unit (4).

4. Electric drive according to claim 3, **characterised in that** the collar (76) is axially spaced from an end face of the hollow shaft (9) and axially delimits the end face of the recess (74).

5. Electric drive according to claim 3 or 4, **characterised in that** the collar (76) comprises an inner diameter which is smaller than an inner diameter of the recess (74) and smaller than an inner diameter of the portion of the hollow shaft (9) which extends from the collar (76) towards the second opening (64).

6. Electric drive according to any of claims 1 to 5, **characterised in that** the transmission unit (4) comprises a reduction gearing (5) and a differential drive (6), wherein the reduction gearing (5) comprises the transmission shaft (15) and is configured to transmit a torque introduced by the drive gear (14) to slow speed, wherein the differential drive (6) comprises an input part (22) which is rotatingly drivable by the transmission shaft (15), and a plurality of output gears (34, 35) which are rotatingly drivable by the input part (22) around the rotational axis (A), wherein the at least one output shaft (36) comprises a first end portion which is rotationally fixed to one of the output parts (35) to transmit torque.

7. Electric drive according to any of claims 1 to 6, **characterised in that** the intermediate wall (52), on a side facing away from the electric motor (3), comprises a lubricant chamber (67) which is designed to temporarily receive lubricant spray occurring upon rotation of rotating parts of the transmission unit (4).

8. Electric drive according to any of claims 1 to 7, **characterised in that** the intermediate wall (52) comprises at least one through-channel (68) which, with a radially outwardly positioned end, ends in the lubricant chamber (67) and through which lubricant can flow from the lubricant chamber to the through-opening of the intermediate wall (52) into the region of the first opening (63).

9. Electric drive according to one of claims 7 or 8, **characterised in that** the housing assembly (10) comprises a lubricant collecting portion (66) which is configured to accumulate lubricant spray and guide same into the lubricant chamber (67).

10. Electric drive according to any of claims 1 to 9, **characterised in that** a clutch (23) is provided in the power path between the electric motor (4) and the at least one output shaft (36), which is configured to selectively effect or interrupt transmission of torque between the electric motor (4) and the at least one output shaft (36).

11. Electric drive according to claims 7 and 10, **characterised in that** the clutch (23) is operable by a controllable actuator (24), wherein the actuator comprises an electro-magnet (46) which is connected to the intermediate wall of the housing assembly (10), wherein a portion of the magnetic housing and a portion of the intermediate wall (52) form the lubricant chamber (67).

12. Electric drive according to any of claims 1 to 11, **characterised in that** the at least one output shaft (36) comprises a second end portion (38) remote from the transmission unit (4) which is supported in a bearing receiving part (59) of the housing assembly (10) by a shaft bearing (40) so as to be rotatable around the rotational axis (A), with the hollow shaft (9) axially extending into the bearing receiving part (59).

13. Electric drive according to claim 12, **characterised in that** the hollow shaft (9) is sealed by a rotational seal (79) relative to the bearing receiving part (59), wherein the second opening (64) of the annular channel (62) is axially arranged between the rotational seal (79) and the shaft bearing (40).

14. Electric drive according to any of claims 1 to 13, **characterised in that** the housing assembly (10) comprises a cover part (55) which is arranged between a first housing portion (53), in which the electric motor (3) is received, and a second housing portion (54) in which the transmission unit (4) is received, wherein the cover part (55) comprises a bearing receiving portion (56),
wherein the hollow shaft (9) comprises a shaft portion connected to the rotor (8) of the electric motor (3), a bearing portion rotatably supported in the bearing receiving portion (56) and the drive gear (14), wherein the drive gear (14) freely extends into a chamber formed between the cover part (55) and the intermediate wall (52).

## Revendications

1. Entraînement électrique pour entraîner un véhicule, comprenant :
un agencement de logement (10) ;
un moteur électrique (3) comprenant un arbre de moteur formé en tant qu'arbre creux (9) qui peut être entraîné en tournant sur un axe de rotation (A) et est relié à une roue d'entraînement (14) ;
une unité de transmission (4) comprenant au moins un arbre de transmission (15) qui peut être entraîné en rotation par la roue d'entraînement (14), et comprenant au moins un arbre de sortie (36), dans lequel l'arbre de sortie (36) s'étend au travers de l'arbre creux (9) ; dans lequel entre l'arbre creux (9) et l'arbre de sortie (36), un canal annulaire (62) est formé, avec une première embouchure (63) tournée vers l'unité de transmission (4) et une seconde embouchure (64) éloignée de l'unité de transmission (4) ;
dans lequel l'agencement de logement (10) présente une géométrie conductrice de lubrifiant (67, 68) et une paroi intermédiaire (52) qui comprend au moins une partie de la géométrie conductrice de lubrifiant, dans lequel la paroi intermédiaire (52) présente radialement à l'intérieur un tronçon annulaire (69) avec une ouverture de passage à travers laquelle est dirigé l'arbre de sortie (36) ;
**caractérisé en ce que** la géométrie conductrice de lubrifiant (67, 68) est conçue pour diriger du lubrifiant dans une zone d'embouchure de la première embouchure (63) du canal annulaire (62) de sorte que le lubrifiant puisse circuler à travers le canal annulaire (62) vers la seconde embouchure (64), dans lequel une fente annulaire (72) est formée entre le tronçon annulaire (69) de la paroi intermédiaire (52) et l'arbre de sortie (36), à travers laquelle le lubrifiant peut circuler de l'unité de transmission (4) vers la première embouchure (63) dans le canal annulaire (62).

2. Entraînement électrique selon la revendication 1, **caractérisé en ce que** la paroi intermédiaire (52) présente un épaulement de manchon (73) coaxial à l'axe de rotation (A) et s'étendant dans le sens axial, lequel se met en prise dans un évidement (74) avant de l'arbre creux (9) par recouvrement axial.

3. Entraînement électrique selon la revendication 1 ou 2, **caractérisé en ce que** l'arbre creux (9) présente un col (76) faisant saillie radialement vers l'intérieur dans un tronçon d'extrémité tourné vers l'unité de transmission (4).

4. Entraînement électrique selon la revendication 3, **caractérisé en ce que** le col (76) est éloigné axialement d'une face avant de l'arbre creux (9) et délimite axialement l'évidement (74) avant.

5. Entraînement électrique selon la revendication 3 ou 4, **caractérisé en ce que** le col (76) présente un diamètre intérieur qui est inférieur à un diamètre intérieur de l'évidement (74) et inférieur à un diamètre intérieur du tronçon de l'arbre creux (9) s'étendant du col (76) en direction de la seconde embouchure (64).

6. Entraînement électrique selon l'une des revendications 1 à 5, **caractérisé en ce que** l'unité de transmission (4) présente une transmission en translation (5) et une transmission différentielle (6), dans lequel la transmission en translation (5) présente l'arbre de transmission (15) et est conçue pour démultiplier un couple de rotation introduit par la roue d'entraînement (14), dans lequel l'engrenage différentiel (6) présente une partie d'entrée (22) qui peut être entraînée en rotation par l'arbre de transmission (15), et plusieurs roues de sortie (34, 35) qui peuvent être entraînées en rotation sur l'axe de rotation (A) par la partie d'entrée (22), dans lequel l'au moins un arbre de sortie (36) présente un premier tronçon d'extrémité qui est relié fixe en rotation à une des parties de sortie (35) pour transmettre le couple de rotation.

7. Entraînement électrique selon l'une des revendications 1 à 6, **caractérisé en ce que** la paroi intermédiaire (52) présente une chambre de lubrifiant (67) sur un côté détourné du moteur électrique (3), qui est conçue pour recevoir temporairement du lubrifiant giclé lors de la rotation des parties rotatives de l'unité d'entraînement (4).

8. Entraînement électrique selon l'une des revendications 1 à 7, **caractérisé en ce que** la paroi intermédiaire (52) présente au moins un canal traversant (68) qui débouche dans la chambre de lubrifiant (67) par une extrémité extérieure radiale et à travers lequel du lubrifiant peut circuler de la chambre de lubrifiant vers l'ouverture de passage de la paroi intermédiaire (52) au niveau de la première embouchure (63).

9. Entraînement électrique selon l'une des revendications 7 ou 8, **caractérisé en ce que** l'agencement de logement (10) présente un tronçon de collecte de lubrifiant (66) qui est conçu pour collecter du lubrifiant giclé et le diriger dans la chambre de lubrifiant (67).

10. Entraînement électrique selon l'une des revendications 1 à 9, **caractérisé en ce que** dans le trajet de puissance entre le moteur électrique (4) et l'au moins un arbre de sortie (36), un accouplement (23) est prévu qui est conçu pour établir ou interrompre au choix une transmission de couple de rotation entre le moteur électrique (4) et l'au moins un arbre de sortie (36) .

11. Entraînement électrique selon la revendication 7 et 10, **caractérisé en ce que** l'accouplement (23) peut être actionné au moyen d'un actionneur (24) pouvant être commandé, dans lequel l'actionneur présente un électroaimant (46) qui est relié à la paroi intermédiaire de l'agencement de logement (10), dans lequel un tronçon partiel du logement d'aimant et un tronçon partiel de la paroi intermédiaire (52) forment la chambre de lubrifiant (67).

12. Entraînement électrique selon l'une des revendications 1 à 11, **caractérisé en ce que** l'arbre de sortie (36) présente un second tronçon d'extrémité (38) éloigné de l'unité de transmission (4) qui est disposé rotatif sur l'axe de rotation (A) au moyen d'un palier d'arbre (40) dans une partie de réception de palier (59) de l'agencement de logement (10), dans lequel l'arbre creux (9) s'étend axialement jusque dans la partie de réception de palier (59).

13. Entraînement électrique selon la revendication 12, **caractérisé en ce que** l'arbre creux (9) est étanchéifié par rapport à la partie de réception de palier (59) au moyen d'un joint rotatif (79), dans lequel la seconde embouchure (64) du canal annulaire (62) est disposée axialement entre le joint rotatif (79) et le palier d'arbre (40).

14. Entraînement électrique selon l'une des revendications 1 à 13, **caractérisé en ce que** l'agencement de logement (10) comprend une partie de couvercle (55) qui est disposée entre un premier tronçon de logement (53) dans lequel le moteur électrique (3) est reçu, et un second tronçon de logement (54) dans lequel l'unité de transmission (4) est reçue, dans lequel la partie de couvercle (55) présente un tronçon de réception de palier (56),
dans lequel l'arbre creux (9) présente un tronçon d'arbre relié à un rotor (8) du moteur électrique (3), un tronçon de palier disposé en pouvant tourner dans le tronçon de réception de palier (56) et la roue d'entraînement (14), dans lequel la roue d'entraînement (14) fait saillie librement dans une chambre formée entre la partie de couvercle (55) et la paroi intermédiaire (52).
